# EUROPÄISCHE PATENTSCHRIFT

(11) **EP 1 470 750 B1**
(45) Veröffentlichungstag und Bekanntmachung des Hinweises auf die Patenterteilung: **09.04.2008**
(21) Anmeldenummer: 04004823.3
(22) Anmeldetag: 02.03.2004
(51) Int. Cl.: A01G 25/14, F16L 3/00

(54) **Einrichtung zum Leiten von Flüssigkeit**
Device for guiding a fluid
Dispositif pour diriger un fluide

(30) Priorität: 23.04.2003 DE 10318448; 19.05.2003 DE 10322780
(43) Veröffentlichungstag der Anmeldung: 27.10.2004
(73) Patentinhaber: Silag Handel AG, 40764 Langenfeld (DE)
(72) Erfinder: Lapawa, Siegfried, 42697 Solingen (DE)
(74) Vertreter: Stenger, Watzke & Ring

(56) Entgegenhaltungen:
- DE-U- 20 207 583
- DE-U- 29 916 200
- FR-A- 2 134 912
- US-A- 2 894 706
- US-A- 2 942 822

## Beschreibung

Die Erfindung betrifft eine Einrichtung zum Leiten von aus dem Leitungsende einer Leitung, insbesondere einer Armatur austretender Flüssigkeit in ein Behältnis, insbesondere einen Eimer, eine Gießkanne oder dergleichen, mit einem aus- und zusammenziehbaren Schlauch, mit einem oberen Einlaufende zur Anordnung am Leitungsende und einem unteren Einlaufende zur Anordnung im oder am Behältnis, wobei ein eine Schlauchführungsöffnung aufweisendes Schlauchführungselement vorgesehen ist und wobei der in der Schlauchführungsöffnung angeordnete Schlauch relativ zum Schlauchhalteelement in axialer Richtung bewegbar ist.

Eine Einrichtung der vorgenannten Art, die auch als Wassereinlaufhilfe bezeichnet wird, ist bereits aus der DE-U-202 07 583 bekannt. In der DE-U-202 07 583 sind zwei unterschiedliche Ausführungsformen beschrieben. Die eine Ausführungsform besteht aus drei Baugruppen, nämlich einem oberen Trichter, der über ein Befestigungsmittel an einem Wasserhahn zu befestigen ist, einem ziehharmonikaähnlichen Schlauch, dessen oberes Ende mit dem Trichter verbunden ist, und einem unteren Einlaufstutzen, der mit dem unteren Ende des Schlauches verbunden ist, wobei der Einlaufstutzen zum Einsetzen in einen Eimer ausgebildet ist und einen großen Deckel mit eingelassenem Zylinder, einer Stütze und einem Befestigungsmittel aufweist. Diese Ausführungsform der bekannten Wassereinlaufhilfe ist nicht nur vergleichsweise aufwendig aufgebaut, von Nachteil ist auch, daß eine sichere Handhabung beim Ausziehen des Schlauches nicht gewährleistet ist. Bei der anderen Ausführungsform weist die bekannte Wassereinlaufhilfe ein innerhalb des betreffenden Behältnisses anzuordnendes Gestell mit einer oberen Platte, durch die der Schlauch hindurchgeführt ist und einer unteren Platte zum Aufsetzen auf den Boden des Behältnisses auf. Die beiden Platten sind über Streben miteinander verbunden. An der oberen Platte befindet sich ein Haken, mit welchem das Gestell an einer Wand des Behälters eingehängt werden soll. Auch diese Ausführungsform der bekannten Wassereinlaufhilfe hat den Nachteil, daß eine sichere Fixierung der Einfiillhilfe am Behältnis beim Herausziehen des Schlauches nicht gewährleistet werden kann. Beim Ausziehen des Schlauches muß der Eimer stets zusammen mit der Wassereinlaufhilfe festgehalten werden, um ein Herausziehen der Wassereinlaufhilfe aus dem Eimer oder aber ein Umfallen des Eimers verhindern. Diese Handhabung hat sich als außerordentlich unpraktisch erwiesen.

Aufgabe der vorliegenden Erfindung ist es daher, eine Einrichtung zum Leiten von Flüssigkeit der eingangs genannten Art zur Verfügung zu stellen, bei der ein Ausziehen des Schlauches ohne weiteres möglich ist, ohne daß die Gefahr des Umfallens des betreffenden Behältnisses oder aber des Herausziehens der Einrichtung aus dem Behältnis befürchtet werden muß.

Die vorgenannte Aufgabe ist erfindungsgemäß im wesentlichen dadurch gelöst, daß mit dem Schlauchführungselement ein im Einbauzustand außerhalb des Behältnisses anzuordnendes Standbein verbunden ist und daß das Standbein eine Fußplatte zum Aufstellen auf den Boden außerhalb des Behältnisses und Auftreten durch den Benutzer aufweist. Durch die erfindungsgemäße Ausgestaltung ist sichergestellt, daß der Benutzer auf die auf dem Boden aufstehende Fußplatte treten kann, so daß die vom Benutzer ausgeübte Gewichtskraft auf die Einrichtung wirkt und diese damit fixiert ist. Sodann kann ohne weiteres der Schlauch ausgezogen werden, ohne daß befürchtet werden muß, daß die Einrichtung vom Behältnis abgezogen wird oder aber das Behältnis während des Ausziehens des Schlauches umfällt. Dabei versteht es sich, daß die Fußplatte eine solche radiale Erstreckung aufweist, daß es ohne weiteres möglich ist, daß der Benutzer mit seinem Fuß auf die Fußplatte treten kann. Es hat sich gezeigt, daß die Erstrekkung der Fußplatte in radialer Richtung eine Länge zwischen 3 und 10 cm haben sollte.

Im einzelnen ist das Standbein derart ausgebildet, daß es einen im Einbauzustand außerhalb des Behältnisses angeordneten Vertikalschenkel einer solchen Länge aufweist, daß er sich im wesentlichen über die gesamte Höhe des Behältnisses erstreckt. Diese Ausgestaltung ist erforderlich, da die Einrichtung letztlich über das Schlauchhalteelement am Rand des Behältnisses befestigt wird und sich das Standbein vom Schlauchhalteelement abwärts bis zum Boden, auf dem auch das Behältnis aufsteht, erstreckt.

Am unteren Ende des Vertikalschenkels ist die rechtwinklig davon abstehende Fußplatte vorgesehen, wobei der Übergang vom Vertikalschenkel zur Fußplatte vorzugsweise verstärkt ist, um die Gefahr eines unabsichtlichen Abbrechens zu verringern.

Im übrigen bietet es sich auch an, an der Fußplatte ein Gelenk in Art eines Scharniers vorzusehen, um die Fußplatte einklappen zu können. Hierdurch wird der für die Einrichtung erforderliche Platzbedarf minimiert.

Vorzugsweise ist am Schlauchhalteelement ein Befestigungsmittel zur lösbaren Befestigung der Einrichtung am Behältnis vorgesehen. Günstigerweise handelt es sich bei dem Befestigungsmittel um eine Rastverbindung, die leicht auf den Rand eines Eimers aufgerastet und von diesem wieder gelöst werden kann. Das Rastmittel weist dabei einen äußeren federnden Rastschenkel sowie ein inneres Widerlager, das auch als innerer federnder Rastschenkel ausgebildet sein kann, auf. Herstellungstechnisch bietet es sich in diesem Zusammenhang an, den Vertikalschenkel des Standbeins einstückig mit dem äußeren Rastschenkel auszubilden, so daß der Vertikalschenkel an seinem oberen Ende in den äußeren Rastschenkel übergeht. Letztlich kann es sich bei dem Schlauchführungselement, dem Befestigungsmittel und dem Standbein um ein einstückiges Bauteil handeln, was sich herstellungstechnisch anbietet.

Die vorliegende Erfindung betrifft weiterhin eine Gießkanne mit einem Gießkannenkörper, mit einer Einfüllöffnung, mit einer Ausgießöffnung und mit einer Einrichtung zum Leiten von aus dem Leitungsende einer Leitung, insbesondere einer Armatur, austretender Flüssigkeit in die Gießkanne, wobei die Einrichtung versehen ist mit einem aus- und zusammenziehbaren Schlauch, mit einem oberen Einlaufende zur Anordnung am Leitungsende und einem unteren Einlaufende zur Anordnung im Gießkannenkörper.

Das Befüllen von Gießkannen ist häufig relativ schwierig. Zum einen ist es so, daß Gießkannen nicht ohne weiteres unter jeden Wasserhahn plaziert werden können, um befüllt zu werden. Häufig ist ein Befüllen von Gießkannen nur bei ganz bestimmten Wasserhähnen möglich. Oft befinden sich diese in einer Höhe, daß die Gießkanne zum Befüllen angehoben werden muß. Je mehr die Gießkanne befüllt ist, desto schwerer wird sie für den Benutzer. Um das Befüllen der Gießkanne zu erleichtern, bietet sich grundsätzlich die aus der DE-U-202 07 583 bekannte Wassereinlaufhilfe an. Beide Ausführungsformen der aus der vorgenannten Druckschrift bekannten Wassereinlaufhilfe sind jedoch nicht ohne weiteres geeignet, um in eine Gießkanne eingesetzt zu werden. Selbst wenn es gelingt, die bekannte Wassereinlaufhilfe in einer Gießkanne anzuordnen, besteht die Gefahr, daß beim Ausziehen des Schlauches die Wassereinlaufhilfe aus der Gießkanne herausgezogen wird.

Aufgabe der vorliegenden Erfindung ist es daher auch, eine Gießkanne der eingangs genannten Art zur Verfügung zustellen, bei der ein einfaches Befüllen möglich ist, ohne daß befürchtet werden muß, die Einrichtung beim Ausziehen des Schlauches aus dem Gießkannenkörper herauszuziehen.

Die vorgenannte Aufgabe ist bei einer Gießkanne der eingangs genannten Art erfindungsgemäß im wesentlichen dadurch gelöst, daß mit dem Gießkannenkörper ein eine Schlauchführungsöffnung aufweisendes Schlauchhalteelement fest verbunden ist, daß der in der Schlauchführungsöffnung angeordnete Schlauch relativ zum Schlauchhalteelement in axialer Richtung bewegbar ist und daß die Gießkanne lediglich über die Ausgießöffnung und den Schlauch befüllbar ist, ohne daß eine weitere Einfüllöffnung vorgesehen ist.

Bei der erfindungsgemäßen Ausgestaltung ist es also so, daß die einzige Einfüllöffnung der Gießkanne sich damit an der Einrichtung selbst befindet. Durch die Erfindung ergeben sich verschiedene Vorteile. Zum einen ist die Einrichtung zum Leiten von Flüssigkeit direkt in den Gießkannenkörper integriert, da das Schlauchhalteelement mit der Schlauchführungsöffnung Teil des Gießkannenkörpers ist. Auf diese Weise kann der Schlauch der Einrichtung zwar ausgezogen werden, die Einrichtung als solche aus dem Gießkannenkörper nicht mehr herausgezogen werden. Im übrigen ist die Gießkanne auch nur noch über den Schlauch, an dem die Einfüllöffnung endseitig vorgesehen ist, befiillbar. Dies führt dazu, daß der Benutzer überhaupt nur noch den Schlauch der Einrichtung zum Befüllen der Gießkanne nutzen kann und folglich auch nicht erst versuchen muß, die Gießkanne über eine andere mögliche Einfüllöffnung zu befüllen.

Wie beim Stand der Technik üblich ist auch bei der erfindungsgemäßen Gießkanne ein den Gießkannenkörper übergreifender Gießkannengriff vorgesehen. Um das Ausziehen des Schlauches durch den Gießkannengriff nicht zu beeinträchtigen, befindet sich das Schlauchhalteelement seitlich neben dem Gießkannengriff.

Ausgestaltungen der Erfindung ergeben sich aus der nachfolgenden Beschreibung von Ausfiihrungsbeispielen. Dabei zeigt:
- Fig. 1: eine schematische Darstellung einer an einem Eimer angebrachten erfindungsgemäßen Einrichtung im ausgezogenen Gebrauchszustand,
- Fig. 2: eine perspektivische Ansicht der erfindungsgemäßen Flüssigkeitsleiteinrichtung im zusammengezogenen Zustand,
- Fig. 3: eine Seitenansicht einer anderen Ausführungsform einer in einen Eimer eingebrachten erfindungsgemäßen Einrichtung,
- Fig. 4: eine Querschnittsansicht eines Teils eines Schlauches der erfindungsgemäßen Einrichtung, der im oberen Teil auseinandergezogen und im unteren Teil zusammengezogen ist,
- Fig. 5: eine Draufsicht auf eine Gießkanne mit einer integrierten Einrichtung und
- Fig. 6: eine perspektivische Ansicht der Gießkanne aus Fig. 5.

Dargestellt ist eine Einrichtung 1 zum Leiten von aus dem Leitungsende einer Leitung austretender Flüssigkeit in ein Behältnis 2. Bei dem Leitungsende kann es sich um jegliches Ende einer Leitung handeln. Im dargestellten Ausführungsbeispiel handelt es sich bei dem Leitungsende um das Ausflußende einer Armatur 3. Wenn im folgenden von "Armatur" die Rede ist, so ist damit grundsätzlich in allgemeiner Form auch das Leitungsende einer Leitung gemeint. Im übrigen ist es so, daß es sich bei dem Behältnis 2 um jegliche Art von Behältnis, insbesondere um Haushaltsbehältnisse wie Putzeimer oder aber auch um Gießkannen, worauf nachfolgend noch näher eingegangen wird, handeln kann.

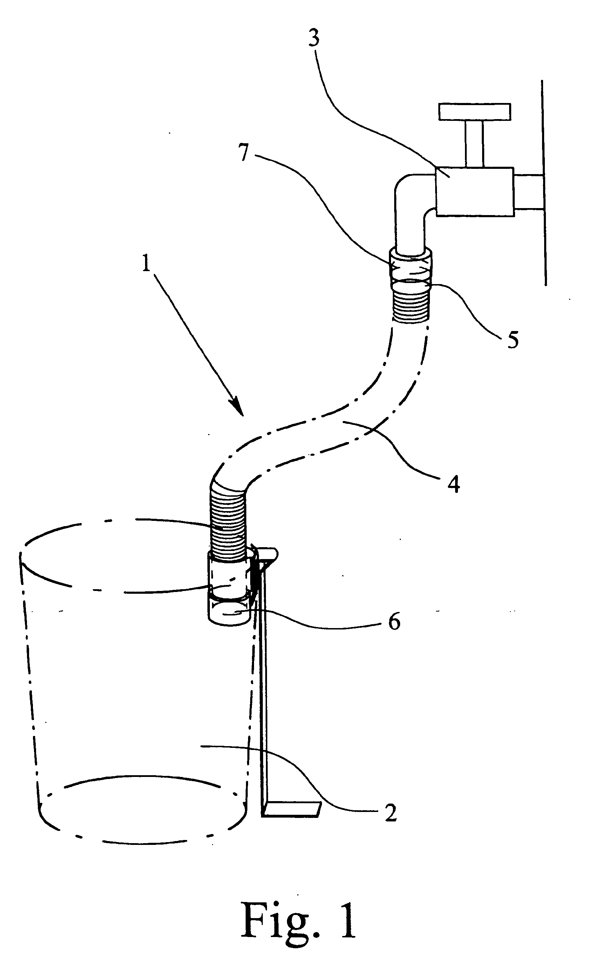

Die Einrichtung 1 dient, wie sich dies aus Fig. 1 ergibt, im wesentlichen dazu, das Füllen eines Behältnisses 2 mit Wasser zu erleichtern. Häufig ist es nicht ohne weiteres möglich, einen Eimer oder eine Gießkanne unmittelbar unter einer Armatur 3 anzuordnen und mit Wasser zu befüllen, da dies eine Vielzahl der heutzutage üblicherweise verwendeten Wasch- und Spülbecken nicht zulassen. Dementsprechend werden Putzeimer oder auch Gießkannen häufig in Badewannen oder Duschtassen befüllt, wo ein hinreichender Platz zum Befüllen zur Verfügung steht.

Zur Vermeidung des vorgenannten Problems weist die Einrichtung 1 einen aus- und zusammenziehbaren Schlauch 4 auf. Die Einrichtung 1 weist weiterhin ein oberes Einlaufende 5, das sich am oberen Ende des Schlauches 4 befindet, zur Anordnung am Leitungsende und ein unteres Einlaufende 6, das sich an das untere Ende des Schlauches 4 anschließt, zur Anordnung im oder am Behältnis 2 auf.

Bei der dargestellten Einrichtung 1 ist es nun so, daß am oberen Einlaufende 5 der Einrichtung 1 ein flexibles Haltemittel 7 mit einer Einführöffnung 8 für das Leitungsende vorgesehen ist. Das Haltemittel 7 und die Einführöffnung 8 sind dabei derart ausgebildet, daß das Haltemittel 7 auf das Leitungsende aufschiebbar und im aufgeschobenen Zustand am Leitungsende gehalten ist, und zwar auch unter Berücksichtigung der Eigengewichtskraft der Einrichtung 1, der Eigenrückstellkraft des Schlauches 4 und der beim Leiten von Flüssigkeit auftretenden Kräfte, die im Ergebnis kleiner sind als die Haltekräfte über das aufgeschobene Haltemittel 7. Das Haltemittel 7 selbst ist zumindest im Bereich der Einführöffnung 8 elastisch, wobei die lichte Öffnungsweite w der Einführöffnung 8 geringer ist als die lichte Öffnungsweite W des Schlauches 4 bzw. des Außendurchmessers des Leitungsendes. Durch die Elastizität des Haltemittels 7 im Bereich der Einführöffnung 8 läßt sich das Haltemittel 7 bzw. die Einführöffnung 8 ohne weiteres an unterschiedlich große Leitungsenden anpassen.

Weiterhin weist das Haltemittel 7 im Bereich der Einführöffnung eine Dichtlippe zur zumindest bereichsweisen Anlage am Leitungsende auf. Hierdurch kann ein Spritzen beim Einfüllen von Flüssigkeit aus dem Leitungsende in die Einrichtung zumindest im wesentlichen verhindert werden. Durch die zumindest bereichsweise Anlage des Haltemittels am Leitungsende wird im übrigen ein im wesentlichen geschlossener Übergang von der Armatur 3 zur Einrichtung 1 sichergestellt. Dem gleichen Ziel dient im übrigen auch, daß das Haltemittel 7 im Bereich der Einführöffnung 8 ausgehend von der Einführöffnung 8 geschlitzt ist. Im dargestellten Ausführungsbeispiel sind zwei auf gegen überliegenden Seiten vorgesehener Einschnitte 10 vorgesehen.

Obwohl es grundsätzlich möglich ist, das Haltemittel in Art eines Dichtrings oder einer Dichtscheibe auszubilden, die am oberen Einlaufende zu befestigen ist, ist bei der dargestellten Ausführungsform vorgesehen, daß das Haltemittel 7 als Kappe ausgebildet ist, die aus elastischem Material besteht und an der oberen Stirnseite 11 die Einführöffnung 8 aufweist. Zur Befestigung der Kappe ist am oberen Einlaufende 5 ein oberes Endstück 12 vorgesehen, auf das die Kappe aufgeschoben und dadurch mit diesem fest verbunden ist. Die Verbindung kann dabei derart sein, daß der lichte Innendurchmesser der Kappe geringer ist als der Außendurchmesser des oberen Endstücks 12, so daß sich ein Reibschluß ergibt. Zusätzlich oder alternativ kann die Kappe auch mit dem oberen Endstück 12 verklebt oder verschweißt sein. Die Kappe ist dabei derart auf das obere Endstück 12 aufgeschoben, daß sich zwischen der Stirnseite 11 der Kappe und der Oberseite 12 des Endstücks ein Abstand a bzw. ein Zwischenraum ergibt. Da die Kappe insgesamt aus elastischem Material, wie einem elastischen Kunststoff, besteht, wird durch den Zwischenraum eine zusätzliche Flexibilität und Elastizität des Haltemittels 7 erzielt, was das Aufschieben auf das Leitungsende erleichtert.

Die Einrichtung 1 weist weiterhin ein hülsenförmiges Schlauchhalteelement 14 auf, das mit einer Schlauchführungsöffnung 15 versehen ist. Die Schlauchiührungsöffnung 15 weist einen lichten Querschnitt auf, der zumindest geringfügig größer ist als der Außendurchmesser des Schlauches 4, so daß der in der Schlauchführungsöffnung 15 angeordnete Schlauch 4 im ausgezogenen oder aber im nicht-ausgezogenen Zustand grundsätzlich relativ zum Schlauchhalteelement 14 in axialer Richtung A bewegbar ist.

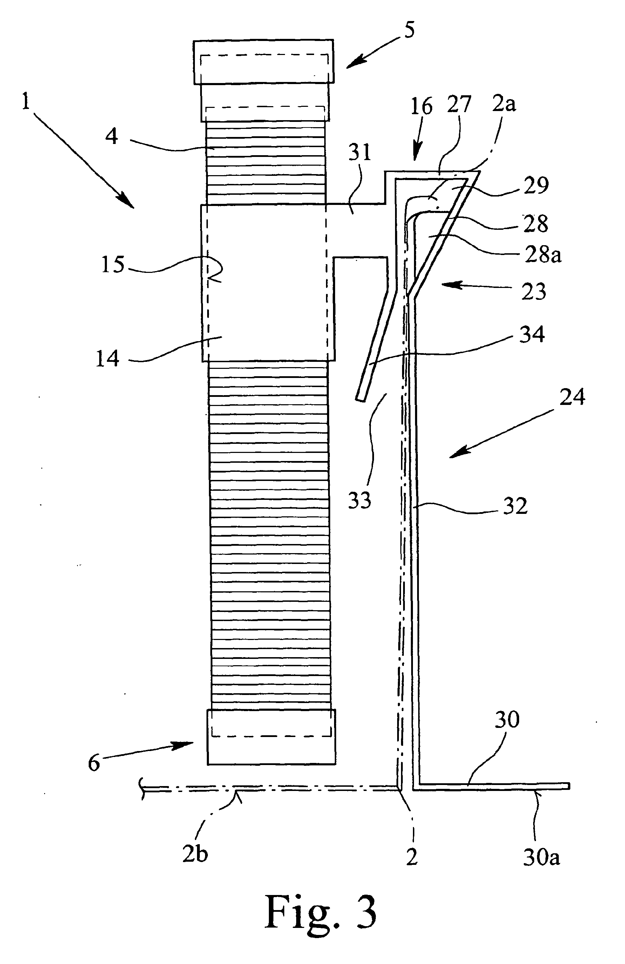

Zur lösbaren Befestigung der Einrichtung 1 am Behältnis 2 ist ein Befestigungsmittel 16 am Schlauchhalteelement 14 vorgesehen. Aufgrund der Befestigung des Schlauchhalteelements 14 am Behältnis 2 ist der Schlauch gegenüber dem Behältnis 2 und dem daran befestigten Schlauchhalteelement 14 relativ bewegbar. Damit der Schlauch 4 nicht aus dem Schlauchhalteelement 14 herausgezogen werden kann, ist am oberen Einlaufende das zuvor bereits erwähnte obere Endstück 12 vorgesehen, während am unteren Einlaufende 6 ein unteres Endstück 17 vorgesehen ist. Das obere Endstück 12 und das untere Endstück 14 wirken dabei als Anschlag bei Bewegung des Schlauches in axialer Richtung A im nicht-ausgezogenen Zustand relativ zum Schlauchhalteelement 14. Letztlich ist der Außendurchmesser der Endstücke 12, 17 größer als der lichte Durchmesser der Schlauchführungsöffnung 15. Wird der Schlauch 4 aus der in Fig. 3 dargestellten Stellung in axialer Richtung A herabbewegt, kommt es zu einem Anschlagen der Ringfläche 18 des oberen Endstücks 12 auf der oberen Ringfläche 19 des Schlauchhalteelements 14, während bei einer Aufwärtsbewegung des Schlauches in axialer Richtung A die Ringfläche 20 an der unteren Ringfläche 21 des Schlauchhalteelements 14 anschlägt. Letztlich wird durch das obere Endstück 12 und das untere Endstück 17 ein Verbleiben des Schlauches im Schlauchhalteelement 14 sichergestellt. Der Einfachheit halber handelt es sich bei den Endstücken 12, 17 im übrigen um gleiche Bauteile, was kostengünstig in der Herstellung ist. Zur Befestigung kann der Schlauch 4 mit den Endstücken 12, 17 verschraubt und/oder verklebt und/oder verklemmt sein.

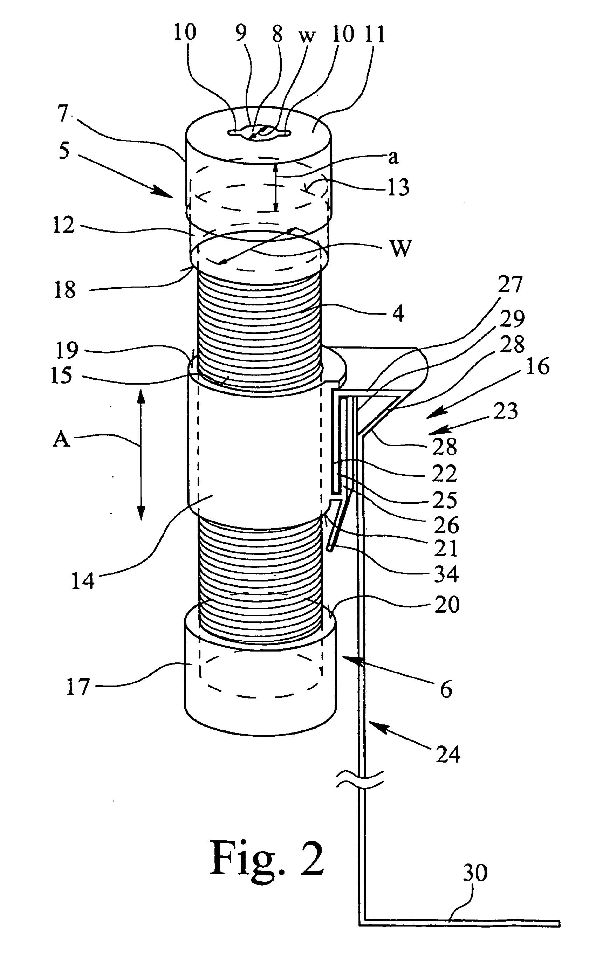

Grundsätzlich kann das Befestigungsmittel 16 als Schraub-, Rast- oder Klemmverbindung ausgebildet sein. Bei den in den Fig. 1 bis 3 dargestellten Ausführungsformen ist jeweils eine Rastverbindung dargestellt. Dabei ist es so, daß am Schlauchhalteelement 14 bei der in Fig. 2 dargestellten Ausführungsform eine Aufnahme 22 zur wahlweisen Anordnung unterschiedlicher Befestigungselemente 23 vorgesehen ist. Hierauf wird nachfolgend noch näher eingegangen. Bei der in Fig. 3 dargestellten Ausführungsform fehlt es an einer Aufnahme 22. Dort ist das Befestigungselement 23 einstückig mit dem Schlauchhalteelement 14 ausgebildet. Bei der in Fig. 2 dargestellten Ausführungsform weist das Befestigungselement 23 zunächst einen Fixierschenkel 25 auf, der vorliegend vertikal verläuft. Der Fixierschenkel 25 ist in die schlitzartige Aufnahme 22 einsetzbar, die durch einen entsprechenden äußeren Halteschenkel 26 gebildet wird. An den Fixierschenkel 25 schließt sich ein im wesentlichen horizontal verlaufender Schenkel 27 an, der zum Übergreifen des oberen Randes 2a des Eimers vorgesehen ist. Seitlich an den Schenkel 27 schließt sich ein äußerer Rastschenkel 28 an, der einwärts bzw. nach innen gerichtet ist. Es versteht sich, daß der zwischen dem Fixierschenkel 25, dem Schenkel 27 und dem Rastschenkel 28 gebildete Zwischenraum 29 derart ausgebildet ist, daß in ihm der Randquerschnitt des Eimers bzw. der obere Rand 2a aufgenommen werden kann. Dabei befindet sich innenseitig am Rastschenkel 28 ein Vorsprung 28a, der zumindest im wesentlichen spielfrei den Rand 2a hintergreift und damit zur Fixierung der Einrichtung 1 am Behältnis 2 beiträgt.

Die Ausführungsform gemäß Fig. 3 unterscheidet sich von der nach Fig. 2 darin, daß das Befestigungsmittel 16 über einen Verbindungssteg 31 fest mit dem Schlauchhalteelement 14 verbunden ist.

Bei beiden Ausführungsformen ist es so, daß mit dem Schlauchführungselement 14 ein im Einbauzustand außerhalb des Behältnisses 2 anzuordnendes Standbein 24 verbunden ist und daß das Standbein 24 eine Fußplatte 30 zum Aufstellen auf den Boden außerhalb des Behältnisses 2 und Auftreten durch den Benutzer aufweist. Das Standbein 24 weist dabei einen im Einbauzustand außerhalb des Behältnisses 2 angeordneten Vertikalschenkel 32 einer solchen Länge auf, daß er sich im wesentlichen über die gesamte Höhe des Behältnisses 2 erstreckt.

In Fig. 3 ist der Einbauzustand angedeutet. Dargestellt ist, daß der obere Rand 2a des Behältnisses 2 im Zwischenraum 29 aufgenommen ist, während die Unterseite 30a der Fußplatte 30 mit der Unterseite 2b des Behältnisses 2, die jeweils beide auf dem nicht dargestellten Boden stehen, aufgefluchtet ist. An seinem unteren Ende geht der Vertikalschenkel 32 in die rechwinklig davon abstehende Fußplatte 30 über. Vorgesehen sein kann, daß der Übergang vom Vertikalschenkel 32 zur Fußplatte 30 verstärkt ist. Dies ist jedoch nicht dargestellt. Im übrigen kann auch vorgesehen sein, daß zwischen dem Vertikalschenkel 32 und der Fußplatte 30 eine Art Scharnier vorgesehen ist, das es ermöglicht, die Fußplatte 30 in Richtung auf den Vertikalschenkel 32 im oder gegen den Uhrzeigersinn zu verschwenken, so daß der für die Einrichtung 1 erforderliche Raumbedarf so gering wie möglich ist.

Bei der in Fig. 3 dargestellten Ausführungsform ist es im übrigen so, daß im oberen Bereich des Vertikalschenkels 32 ein Einführschlitz 33 zwischen dem Vertikalschenkel 32 und einem weiteren Schenkel 34 gebildet ist. Der Einfiihrschlitz 33 erweitert sich nach außen hin, was durch die schräge Anordnung des weiteren Schenkels 34 gewährleistet wird. Auch bei der in Fig. 2 dargestellten Ausfiihrungsform ist ein weiterer Schenkel 34 und damit ein sich entsprechend erweiternder Einfiihrschlitz 33 vorgesehen. Die Ausbildung des sich erweiternden Einfiihrschlitzes kann selbstverständlich auch in anderer Weise geschehen.

Die in Fig. 2 dargestellte Ausführungsform hat gegenüber der in Fig. 3 dargestellten Ausführungsform im übrigen den Vorteil, daß bedarfsweise unterschiedlich große Standfüße in die Aufnahme 22 eingesetzt werden können. Die einstückige Ausführungsform gemäß Fig. 3 kann letztlich lediglich für einen Eimertypen verwendet werden. Grundsätzlich ist es aber auch möglich, den Vertikalschenkel 32 ausziehbar auszubilden. Dies kann stufenweise oder aber auch stufenlos geschehen, wobei dann entsprechende Feststelleinrichtungen vorzusehen sind.

Bei allen Ausführungsformen kann es im übrigen so sein, daß der Bereich des Zwischenraums 29 zumindest teilweise mit einem rutschfesten Kunststoff beschichtet oder bezogen sein kann.

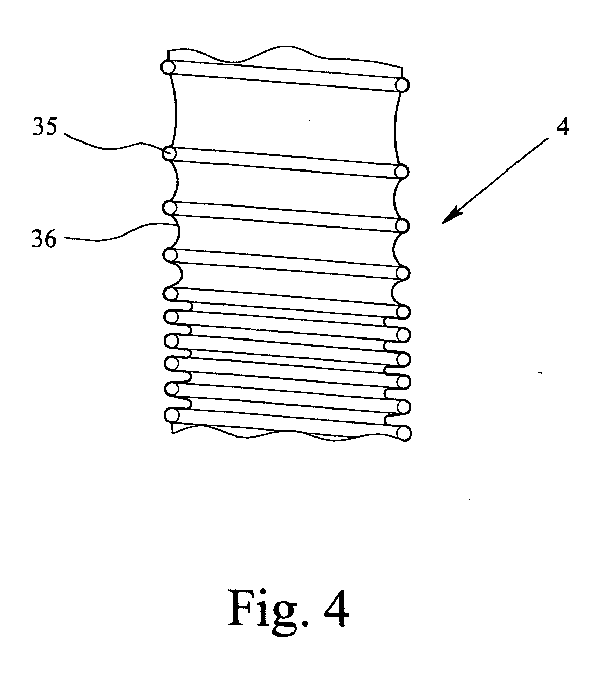

Zuvor ist bereits darauf hingewiesen worden, daß der Schlauch 4 ziehharmonikaartig ausgebildet ist und zwar derart, daß er sich automatisch aus einem ausgezogenen Zustand, sei es nun geringfügig oder maximal ausgezogen, aufgrund der Eigenflexibilität in den zusammengezogenen Anfangszustand, wie dies in den Fig. 2 und 3 dargestellt ist, zusammenzieht. Erreicht wird dies durch eine Spiralfeder 35, die sich über die Länge des Schlauches 4 erstreckt und quasi den Schlauchgrundkörper bildet. Auf die Spirale aufgebracht, und zwar innen- oder außenseitig, ist eine flexible flüssigkeitsdichte Außenhaut 36. Im nicht-ausgezogenen Zustand, wie er in Fig. 4 im unteren Teil dargestellt ist, liegt die Außenhaut 36 eingefaltet zwischen den einzelnen Windungen der Spirale 35, während die Außenhaut 36 gestreckt wird, wenn der Schlauch 4 auseinandergezogen wird, wie dies im oberen Teil der Fig. 4 dargestellt ist.

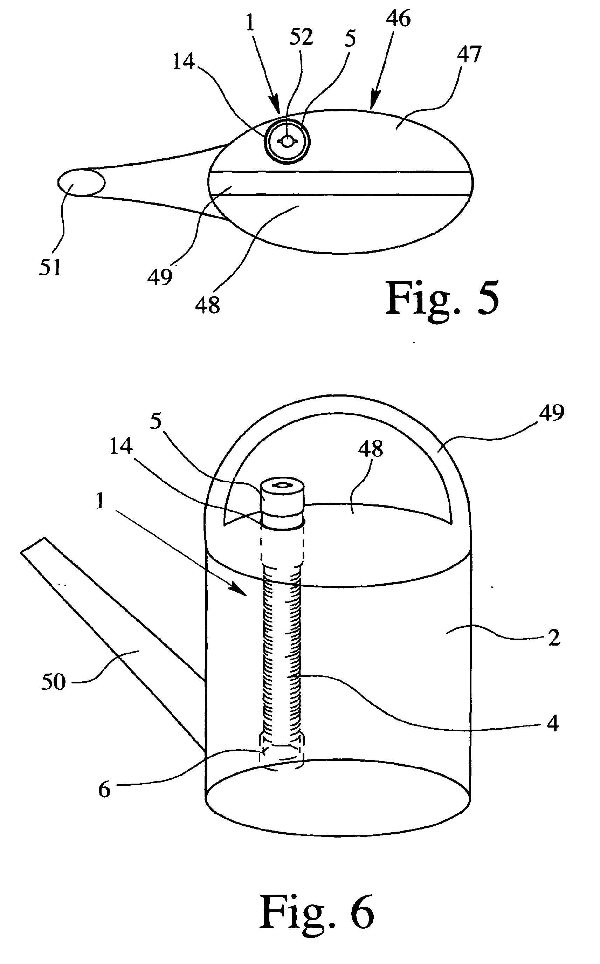

Bei der in den Fig. 5 und 6 dargestellten Ausführungsform handelt es sich bei dem Behältnis um eine Gießkanne 46 mit einem Gießkannenkörper 47. Hierbei ist das Schlauchhalteelement 14 fest in der oberen Wandung 48 des Gießkannenkörpers 47 angeordnet. Es handelt sich dabei um eine feste oder einstückige Verbindung zwischen der oberen Wandung 48 und dem Schlauchhalteelement 14. Die Anordnung der Einrichtung 1 an der Gießkanne 46 ist im übrigen so, daß sich die Einrichtung 1 seitlich neben dem den Gießkannenkörper 47 übergreifenden Gießkannengriff 49 befindet, so daß das Herausziehen des Schlauches 4 durch den Gießkannengriff 49 nicht behindert wird. Neben dem Gießkannenkörper 47 weist die Gießkanne 46 noch einen Ausgießhals 50 mit einer Ausgießöffnung 51 auf.

Die erfindungsgemäße Gießkanne 46 zeichnet sich vorliegend dadurch aus, daß auf der oberen Wandung 42 keine zusätzliche Öffnung vorgesehen ist. Das Einfiillen von Wasser erfolgt letztlich über die Einrichtung 1, durch die die Einfüllöffnung 52 zur Verfügung gestellt wird. Es versteht sich, daß bei der in Fig. 5 und 10 dargestellten Gießkanne 46 auch ein ausziehbarer oder aber nicht ausziehbarer Fuß der vorgenannten Art vorgesehen sein kann.

## Patentansprüche

1. Einrichtung (1) zum Leiten von aus dem Leitungsende einer Leitung, insbesondere einer Armatur (3) austretender Flüssigkeit in ein Behältnis (2), insbesondere einen Eimer, eine Gießkanne oder dergleichen, mit einem aus- und zusammenziehbaren Schlauch (4), mit einem oberen Einlaufende (5) zur Anordnung am Leitungsende und einem unteren Einlaufende (6) zur Anordnung im oder am Behältnis (2), wobei ein eine Schlauchführungsöffnung (15) aufweisendes Schlauchhalteelement (14) vorgesehen ist und wobei der in der Schlauchführungsöffnung (15) angeordnete Schlauch (4) relativ zum Schlauchhalteelement (14) in axialer Richtung (A) bewegbar ist,
**dadurch gekennzeichnet,**
**daß** mit dem Schlauchhalteelement (14) ein außerhalb des Behältnisses (2) anzuordnendes Standbein (24) verbunden ist und daß das Standbein (24) eine Fußplatte (30) zum Aufstellen auf den Boden außerhalb des Behältnisses (2) und Auftreten durch den Benutzer aufweist.

2. Einrichtung nach Anspruch 1, **dadurch gekennzeichnet, daß** das Standbein (24) einen im Einbauzustand außerhalb des Behältnisses (2) angeordneten Vertikalschenkel (32) einer solchen Länge aufweist, daß er sich im wesentlichen über die gesamte Höhe des Behältnisses (2) erstreckt.

3. Einrichtung nach Anspruch 1 oder 2, **dadurch gekennzeichnet, daß** der Vertikalschenkel (32) an seinem unteren Ende in die rechtwinklig davon abstehende Fußplatte (30) übergeht und daß, vorzugsweise, der Übergang vom Vertikalschenkel (32) zur Fußplatte (30) verstärkt ist.

4. Einrichtung nach einem der vorhergehenden Ansprüche, **dadurch gekennzeichnet, daß** die Fußplatte (30) angelenkt ist.

5. Einrichtung nach einem der vorhergehenden Ansprüche, **dadurch gekennzeichnet, daß** am Schlauchhalteelement (14) ein Befestigungsmittel (16) zur lösbaren Befestigung der Einrichtung (1) am Behältnis (2) vorgesehen ist.

6. Einrichtung nach einem der vorhergehenden Ansprüche, **dadurch gekennzeichnet, daß** das Befestigungsmittel (16) als Rastmittel mit einem äußeren Rastschenkel (28) zum Aufrasten auf den Rand (2a) des Behältnisses (2) ausgebildet und daß, vorzugsweise, der Vertikalschenkel (32) an seinem oberen Ende in den äußeren Rastschenkel (28) übergeht.

7. Gießkanne (46) mit einem Gießkannenkörper (47), mit einer Einfüllöffnung (52), mit einer Ausgießöffnung (51) und mit ein Einrichtung (1) zum Leiten von aus dem Leitungsende einer Leitung, insbesondere einer Armatur, (3) austretender Flüssigkeit in die Gießkanne (46), wobei die Einrichtung (1) versehen ist mit einem aus- und zusammenziehbaren Schlauch (4), mit einem oberen Einlaufende (5) zur Anordnung am Leitungsende und einem unteren Einlaufende (6) zur Anordnung im Gießkannenkörper (47),
**dadurch gekennzeichnet,**
**daß** mit dem Gießkannenkörper (47) ein eine Schlauchführungsöffhung (15) aufweisendes Schlauchhalteelement (14) fest verbunden ist, daß der in der Schlauchführungsöffnung (15) angeordnete Schlauch (4) relativ zum Schlauchhalteelement (14) in axialer Richtung bewegbar ist und daß die Gießkanne (46) lediglich über die Ausgießöffnung (51) und den Schlauch (4) befüllbar ist, ohne daß eine weitere Einfüllöffnung vorgesehen ist.

8. Gießkanne nach Anspruch 7, **dadurch gekennzeichnet, daß** ein den Gießkannenkörper (47) übergreifender Gießkannengriff (49) vorgesehen ist und daß das Schlauchhalteelement (14) seitlich neben dem Gießkannengriff (49) angeordnet ist.

## Claims

1. A device (1) for guiding liquid discharging from the end of a conduit, particularly a valve (3), into a container (2) particularly a bucket, a watering can or the like, with an extendable and retractable hose (4) with an upper inlet end (5) for arrangement at the end of the conduit and a lower inlet end (6) for arrangement in or on the container (2), wherein a hose retaining element (14) including a hose guiding opening (15) is provided and wherein the hose (4) disposed in the hose guiding opening (15) is movable in the axial direction (A) relative to the hose retaining element (14), **characterised in that** connected to hose retaining element (14) there is a support leg (24) for disposition outside the container (2) and that the support leg (24) has a foot plate (30) for resting on the ground outside the container (2) and for standing on by the user.

2. A device as claimed in claim 1, **characterised in that** the support leg (24) includes a vertical limb (32), which is arranged, in the installed state, outside the container (2), of such a length that it extends substantially over the entire height of the container (2).

3. A device as claimed in claim 1 or 2, **characterised in that** the vertical limb (32) merges at its lower end into the foot plate, which projects therefrom at right angles, and that, preferably, the transition between the vertical limb (32) and the foot plate (30) is reinforced.

4. A device as claimed in one of the preceding claims, **characterised in that** the foot plate (30) is hingedly connected.

5. A device as claimed in one of the preceding claims, **characterised in that** fastening means (16) for releasably fastening the device (1) to the container (2) is provided on the hose retaining element (14).

6. A device as claimed in one of the preceding claims, **characterised in that** the fastening means (16) is constructed in the form of locking means with an outer locking limb (28) for locking onto the edge (2a) of the container (2) and that, preferably, the vertical limb (32) merges at its upper end into the outer locking limb (28).

7. A watering can (46) with a watering can body (47) with a filling opening (52), a pouring opening (51) and with a device (1) for guiding liquid discharging from the end of a conduit, particularly a valve (3), into the watering can (46), wherein the device (1) is provided with an expandable and retractable hose with an upper inlet end (5) for arrangement at the end of the conduit and a lower inlet end (6) for arrangement in the watering can body (47), **characterising in that** rigidly connected to the watering can body (47) there is a hose retaining element (14), which includes a hose guiding opening (15), that the hose (4) arranged in the hose guiding opening (15) is movable in the axial direction relative to the hose retaining element (14) and that the watering can (46) is fillable only via the pouring opening (51) and the hose (4) without a further filling opening being provided.

8. A watering can as claimed in claim 7, **characterised in that** a watering can handle (49), which extends over the watering can body (47), is provided and that the hose retaining element (14) is arranged laterally adjacent the watering can handle (49).

## Revendications

1. Dispositif (1) pour diriger un liquide sortant de l'extrémité d'une conduite, en particulier d'un appareil de robinetterie (3), vers un récipient (2), en particulier un seau, un arrosoir ou similaire, avec un tuyau (4) pouvant être déployé et replié, avec une extrémité d'entrée supérieure (5) destinée à être disposée à l'extrémité de la conduite et une extrémité d'entrée inférieure (6) destinée à être disposée dans ou sur le récipient (2), dans lequel est prévu un élément de rétention du tuyau (14) possédant une ouverture de guidage du tuyau (15) et dans lequel le tuyau (4) disposé dans l'ouverture de guidage du tuyau (15) est mobile par rapport à l'élément de rétention du tuyau (14) dans le sens axial (A),
**caractérisé en ce que** l'élément de rétention du tuyau (14) est relié à un piètement (24) destiné à être disposé à l'extérieur du récipient (2) et **en ce que** le piètement (24) présente une plaque de pied (30) pour le poser sur le sol à l'extérieur du récipient (2) et pour que l'utilisateur pose son pied dessus.

2. Dispositif selon la revendication 1, **caractérisé en ce que** le piètement (24) présente un bras vertical (32) disposé à l'extérieur du récipient (2) dans l'état assemblé et ayant une longueur telle qu'il s'étend pour l'essentiel sur toute la hauteur du récipient (2).

3. Dispositif selon la revendication 1 ou 2, **caractérisé en ce que** le bras vertical (32) est relié à son extrémité inférieure à la plaque de pied (30) qui s'en écarte à angle droit, et **en ce que** la transition entre le bras vertical (32) et la plaque de pied (30) est de préférence renforcée.

4. Dispositif selon l'une des revendications précédentes, **caractérisé en ce que** la plaque de pied (30) est articulée.

5. Dispositif selon l'une des revendications précédentes, **caractérisé en ce qu'**il est prévu sur l'élément de rétention du tuyau (14) un moyen de fixation (16) pour la fixation amovible du dispositif (1) sur le récipient (2).

6. Dispositif selon l'une des revendications précédentes, **caractérisé en ce que** le moyen de fixation (16) est conformé comme un moyen d'emboîtement avec un bras d'emboîtement extérieur (28) destiné à s'emboîter sur le bord (2a) du récipient (2) et **en ce que** le bras vertical (32) est de préférence relié à son extrémité supérieure au bras d'emboîtement extérieur (28).

7. Arrosoir (46) avec un corps d'arrosoir (47), avec une ouverture de remplissage (52), avec une ouverture d'arrosage (51) et avec un dispositif pour l'acheminement d'un liquide sortant à l'extrémité d'une conduite, en particulier d'un appareil de robinetterie (3), vers l'arrosoir (46), dans lequel le dispositif (1) est pourvu d'un tuyau (4) pouvant être déployé et replié, avec une extrémité d'entrée supérieure (5) destinée à être disposée à l'extrémité de la conduite et une extrémité d'entrée inférieure (6) destinée à être disposée dans le corps de l'arrosoir (47),
**caractérisé en ce que** le corps de l'arrosoir (47) est relié à un élément de rétention du tuyau (14) présentant une ouverture de guidage du tuyau (15), **en ce que** le tuyau (4) disposé dans l'ouverture de guidage du tuyau (15) est mobile par rapport à l'élément de rétention du tuyau (14) dans le sens axial et **en ce que** l'arrosoir (46) peut être rempli simplement par l'ouverture d'arrosage (51) et le tuyau (4), sans qu'il soit prévu d'autre ouverture de remplissage.

8. Arrosoir selon la revendication 7, **caractérisé en ce qu'**il est prévu une poignée d'arrosoir (49) passant pardessus le corps de l'arrosoir (47) et **en ce que** l'élément de rétention du tuyau (14) est disposé latéralement à côté de la poignée de l'arrosoir (49).
